# EUROPÄISCHE PATENTANMELDUNG

(11) **EP 1 650 083 A1**
(43) Veröffentlichungstag der Anmeldung: **26.04.2006**
(21) Anmeldenummer: 06001364.6
(22) Anmeldetag: 06.09.2004
(51) Int. Cl.: B60R 7/04, B60J 7/00

(54) **Kraftfahrzeugdach mit einer sich in Dachlängsrichtung erstreckenden Mittelkonsole**

(30) Priorität: 09.09.2003 DE 10341558
(62) Teilanmeldung aus: 04021143.5
(71) Anmelder: Webasto AG, 82131 Stockdorf (DE)
(72) Erfinder: Leroy, Alain, 86911 Diessen-Dettenschwang (DE); Rudolph, Thomas, 82229 Hechendorf (DE); Schönauer, Miriam, 85049 Ingolstadt (DE)

(57) **Zusammenfassung**

Die Erfindung betrifft ein Kraftfahrzeugdach mit einer sich Dachlängsrichtung erstreckenden, karosseriefest montierten Mittelkonsole (10), deren Oberseite in diesem Bereich die Dachaußenfläche bildet, sowie jeweils einem sich von der Mittelkonsole aus seitlich bis zu einer karosseriefesten Begrenzung erstreckenden transparenten Bereich (14), dessen Oberseite in diesem Bereich die Dachaußenfläche bildet. Die Mittelkonsole weist mindestens ein Ablagefach auf.

## Beschreibung

Die vorliegende Erfindung betrifft ein Kraftfahrzeugdach mit einer sich in Längsrichtung erstreckenden Mittelkonsole.

Ein Kraftfahrzeugdach mit einer Mittelkonsole gemäß dem Oberbegriff von Anspruch 1, 17, 23, 28 bzw. 36 ist aus der DE 101 58 742 A1 bekannt, wobei die Oberseite der Mittelkonsole in diesem Bereich die Dacitaußenfläche bildet und wobei beiderseits der Mittelkonsole zwischen der Mittelkonsole und einem Dachrahmen jeweils zwei verstellbare Glasdeckel vorgesehen sind, die in diesem Bereich die Dachaußenfläche bilden. An der Unterseite der Mittelkonsole sind ein ausklappbarer Flachbildschirm, Bedienelemente für die Verstellung der Glasdeckel oder für den Flachbildschirm sowie Einrichtungen, die den Flachbildschirm mit Daten versorgen, vorgesehen.

In der nicht vorveröffentlichten älteren deutschen Patentanmeldung mit dem Aktenzeichen 103 15 635 ist ein Kraftfahrzeugdach beschreiben, bei welchem eine sich in Dachlängsrichtung erstreckende Mittelkonsole unterhalb einer Dachfläche angebracht ist, die von einem transparenten Deckel gebildet wird. Dabei können in Dachlängsrichtung verschiebbare plattenartige Sonnenschutzelemente vorgesehen sein, die entweder vollständig oberhalb der Mittelkonsole oder nur seitlich der Mittelkonsole angeordnet sind. Die Mittelkonsole kann verschiedene Nutzeinrichtungen für die Fahrzeuginsassen, beispielsweise ein Ablagefach, einen Bildschirm, eine Beleuchtung oder eine Belüftung enthalten.

In der nicht vorveröffentlichten älteren deutschen Patentanmeldung mit dem Aktenzeichen 103 31 271 ist ein Kraftfahrzeugdach mit einer Mittelkonsole beschrieben, die unterhalb eines transparenten Dachbereichs angeordnet ist und in Dachlängsrichtung ausziehbar ist. Beiderseits der Mittelkonsole können in Dachlängsrichtung verstellbare Sonnenschutzeinrichtungen vorgesehen sein.

Aus der DE 43 40 980 A1 ist eine Mittelkonsole für ein Kraftfahrzeugdach bekannt, welche in einer Schiebedachöffnung anbringbar ist.

Aus der GB 2 134 464 A ist ein Himmelmodul für ein Kraftfahrzeugdach bekannt, wobei in das Himmelmodul eine Mittelkonsole integriert ist, die an ihrer Unterseite mit verschiedenen Funktionselementen versehen ist.

Aus der DE 100 56 041 A1 ist ein Dachaufsatz für ein Kraftfahrzeug bekannt, der von außen seitlich zugängliche Gepäckfächer aufweist.

Aus der DE 37 17 826 A1 ist ein Dachaufsatz für einen Omnibus bekannt, welcher als von unten durch eine Dachluke zugänglicher Gepäckraum ausgebildet ist.

Aus der DE 196 43 188 C1 ist ein Kraftfahrzeugdach mit zwei im hinteren Dachbereich angeordneten starren Entflüftungshauben bekannt.

Es ist eine erste Aufgabe der vorliegenden Erfindung, ein Kraftfahrzeugdach zu schaffen, wobei für leicht zugänglichen zusätzlichen Stauraum gesorgt werden soll.

Es ist eine zweite Aufgabe der vorliegenden Erfindung, ein Kraftfahrzeugdach mit einer Mittelkonsole und seitlichen transparenten Bereichen zu schaffen, wobei auf einfache und platzsparende Weise für eine optionale Abschattung der transparenten Bereiche bezüglich des Fahrzeuginnenraums gesorgt werden soll.

Es ist eine dritte Aufgabe der vorliegenden Erfindung, ein Kraftfahrzeugdach mit einer Mittelkonsole zu schaffen, welches eine flexible Lüftungsfunktion ermöglicht.

Die erste Aufgabe wird erfindungsgemäß gelöst durch ein Kraftfahrzeugdach gemäß Anspruch 1, 23 bzw. 28. Bei der Lösung gemäß Anspruch 1 ist vorteilhaft, dass dadurch, dass die Mittelkonsole mindestens ein Ablagefach aufweist, in ästhetischer ansprechender Weise zusätzlicher Stauraum geschaffen werden kann, der für die Fahrzeuginsassen leicht zugänglich ist. Bei der Lösung gemäß Anspruch 23 ist besonders vorteilhaft, dass in ästhetisch ansprechender Weise zusätzlicher Stauraum geschaffen wird, der für die Fahrzeuginsassen besonders leicht zugänglich ist, wobei ferner durch die Verschiebbarkeit der Ablagebox eine große Flexibilität hinsichtlich der Nutzung durch die Fahrzeuginsassen erzielt wird. Auch die Lösung gemäß Anspruch 28 zeichnet sich durch eine besonders große Flexibilität der Nutzung der Mittelkonsole, insbesondere als Ablageraum, aus, wobei hier im Bedarfsfall ein besonders großer Ablageraum geschaffen werden kann, während bei Nutzung des Fahrzeugs ohne großen Stauraumbedarf dennoch eine relativ niedrige Bauhöhe des Fahrzeugdaches gewährleistet ist.

Die zweite Aufgabe wird erfindungsgemäß gelöst durch ein Kraftfahrzeugdach gemäß Anspruch 17. Bei dieser Lösung ist vorteilhaft, dass dadurch, die Abdeckelemente in der den transparenten Bereich freilegenden Stellung in der Mittelkonsole aufgenommen sind, für eine besonders platzsparende Lagerung der Abdeckelemente in dieser Stellung gesorgt werden kann.

Die dritte Aufgabe wird erfindungsgemäß gelöst durch ein Kraftfahrzeugdach gemäß Anspruch 6. Bei dieser Lösung ist vorteilhaft, dass in ästhetisch ansprechender Weise für eine flexible Lüftungsfunktion gesorgt werden kann. Insbesondere kann eine ästhetische Beeinträchtigung des Erscheinungsbilds der Dachfläche in Zeiträumen vermieden werden, in welchen keine Lüftungsfunktion gewünscht ist, da dann ein Ausstellen der Lüftungsklappen nicht erforderlich ist.

Bevorzugte Ausgestaltungen der Erfindung ergeben sich aus den Unteransprüchen.

Im folgenden wird die Erfindung anhand der beigefügten Zeichnungen beispielhaft näher erläutert.

Dabei zeigen:
- Fig. 1:: eine schematische perspektivische Ansicht einer ersten Ausführungsform eines erfindungsgemäßen Kraftfahrzeugdaches von oben;
- Fig. 2: eine Ansicht wie Fig. 1, wobei eine abgewandelte Ausführungsform dargestellt ist;
- Fig. 3: eine Querschnittansicht des Kraftfahrzeugdaches von Fig. 1;
- Fig.4: eine schematische perspektivische Ansicht einer weiteren Ausführungsform eines erfindungsgemäßen Fahrzeugdaches aus dem Fahrzeuginnenraum;
- Fig. 5 und 6: schematische perspektivische Ansichten zweier Ausführungsformen der Dachaußenfläche des Fahrzeugdachs von Fig. 4;
- Fig. 7: eine Ansicht wie Fig. 4, wobei eine abgewandelte Ausführungsform gezeigt ist;
- Fig. 8: eine schematische Querschnittansicht des Fahrzeugdaches von Fig. 7;
- Fig. 9: eine schematische perspektivische Ansicht der Dachaußenfläche des Fahrzeugdaches von Fig. 7;
- Fig. 10-12: Ansichten wie Fig. 7-9, wobei eine abgewandelte Ausführungsform gezeigt ist;
- Fig. 13: eine schematische perspektivische Ansicht einer weiteren Ausführungsform eines erfindungsgemäßen Fahrzeugdaches aus dem Fahrzeuginnenraum;
- Fig. 14: eine schematische perspektivische Ansicht einer weiteren Ausführungsform eines erfindungsgemäßen Fahrzeugdaches aus dem Fahrzeuginnenraum;
- Fig. 15: eine schematische Querschnittsansicht des Fahrzeugdaches von Fig. 14 mit in der Ruhestellung befindlichen Abdeckelementen;
- Fig. 16: eine schematische perspektivische Ansicht der Dachaußenfläche einer weiteren Ausführungsform eines erfindungsgemäßen Fahrzeugdaches mit nach oben ausgezogener Mittelkonsole;
- Fig. 17: eine Ansicht wie Fig. 16, wobei die Mittelkonsole in der Ruhestellung gezeigt ist;
- Fig. 18-20: schematische perspektivische Ansichten weiterer Ausführungsformen eines erfindungsgemäßen Fahrzeugdaches aus dem Fahrzeuginnenraum; und
- Fig. 21: eine schematische perspektivische Ansicht der Dachaußenfläche einer weiteren Ausführungsform eines erfindungsgemäßen Fahrzeugdaches mit ausgestellten Lüftungsklappen.

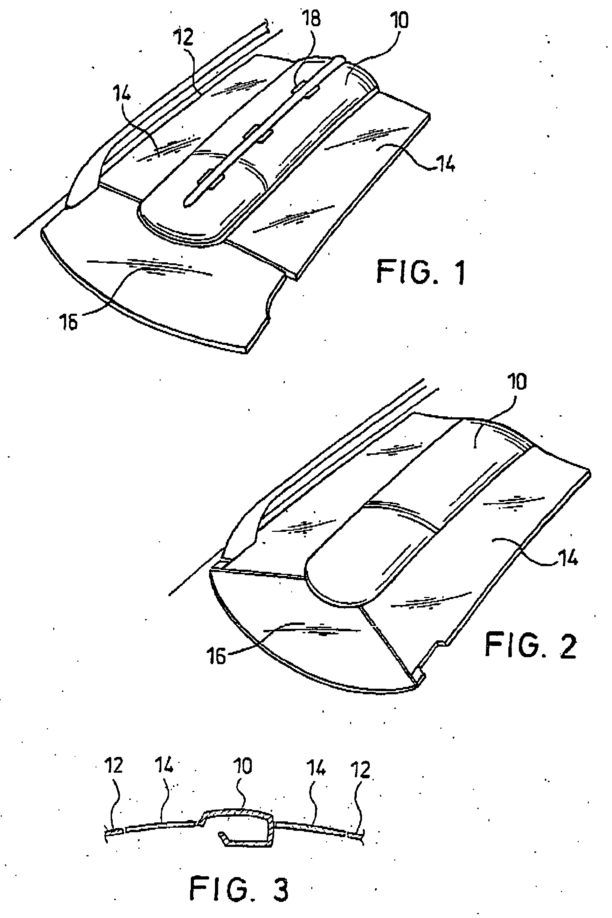

In Fig. 1 und 3 ist eine erste Ausführungsform eines Kraftfahrzeugdaches mit einer sich in Dachlängsrichtung erstreckenden, karrosseriefest montierten Mittelkonsole 10 gezeigt, deren Oberseite in diesem Bereich die Dachaußenfläche bildet. Zu beiden Seiten der Mittelkonsole 10 ist jeweils ein sich von der Mittelkonsole 10 bis zu einer karrosseriefesten Begrenzung 12 erstreckender transparenter Bereich 14 vorgesehen, dessen Oberseite in diesem Bereich die Dachaußenfläche bildet. An dem vorderen Ende der Mittelkonsole schließt sich ein weiterer transparenter Bereich 16 an, der sich über die gesamte Dachbreite erstreckt und dessen Oberseite in diesem Bereich die Dachaußenfläche bildet. Die Oberseite der Mittelkonsole 10 ist in ihrem zentralen Bereich mit Ösen 18 versehen, die zur Befestigung von Gurten und ähnlichem für Dachlasten dienen können (in Fig. 3 nicht dargestellt).

Gemäß Fig. 3 ist die Mittelkonsole als Ablagefach ausgebildet, welches aus dem Fahrzeuginnenraum zugänglich ist und sich über die gesamte Breite der Mittelkonsole 10 erstreckt. Das Ablagefach ist dabei gemäß Fig. 3 an der linken Seite offen, wobei die Querschnittsform des Ablagefachs im wesentlichen C-förmig ist.

Die Oberseite der Mittelkonsole 10 liegt höher als die seitlichen Begrenzungen 12 und die transparenten Bereiche 14, so dass die Oberseite der Mittelkonsole 10 über die transparenten Bereiche 14 nach oben hervorsteht. Die transparenten Bereiche 14 sind dabei in der Dachquerrichtung leicht nach oben gewölbt. Auch die Oberseite der Mittelkonsole 10 ist leicht nach oben gewölbt.

In Fig. 2 ist eine abgewandelte Ausführungsform gezeigt, wobei die Oberseite der Mittelkonsole 10 mit dem an die Mittelkonsole 10 jeweils angrenzenden Rand des jeweiligen transparenten Bereichs 14 im wesentlichen bündig ist. Insgesamt sind die Oberseite der Mittelkonsole 10 und die transparenten Bereiche 14 bezüglich der seitlichen Begrenzungen 12 domartig nach oben gewölbt.

Generell können die transparenten Bereiche 14 von Glas- oder Kunststoffscheiben gebildet werden.

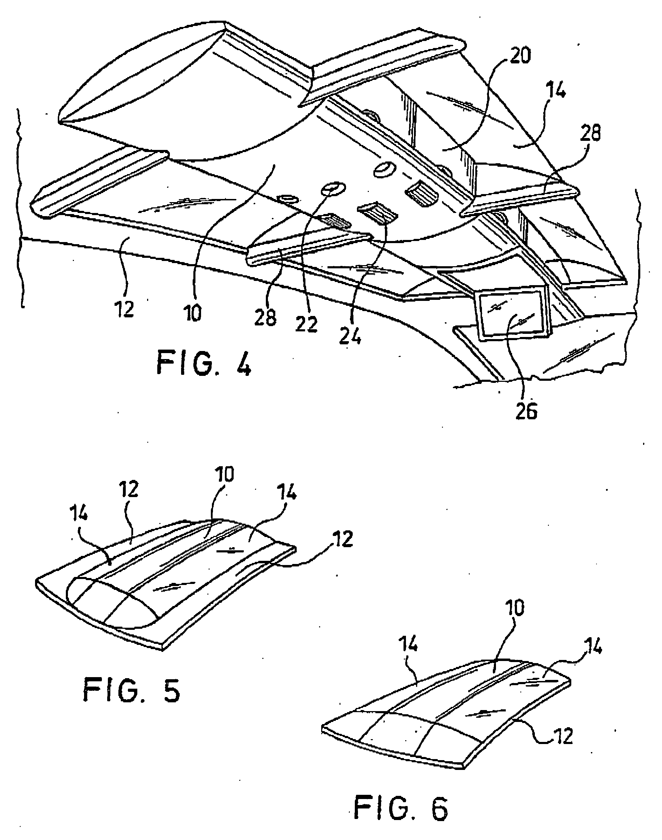

In Fig. 4 ist eine schematische Ansicht der Unterseite eines Fahrzeugdaches in der Art von Fig. 1 oder 2 gezeigt, wobei die Unterseite der Mittelkonsole 10 bezüglich dem an die Mittelkonsole 10 angrenzenden Rand der transparenten Bereiche 14 nach unten hervorsteht. In dem nach unten vorstehenden Bereich der Mittelkonsole 10 sind dabei seitlich mehrere Klappen 20 vorgesehen, welche vom Fahrzeuginnenraum aus geöffnet werden können, um in der Mittelkonsole 10 ausgebildete Ablagefächer zugänglich zu machen. An der Unterseite der Mittelkonsole 10 sind in Fig. 4 verschiedene Funktionselemente gezeigt, wie z.B. Beleuchtungselemente 22, Belüftungsöffnungen 24 und ein in Fig. 4 nach unten geklappter Flachbildschirm 26. Als zusätzliche Funktionselemente können beispielsweise Bedienelemente, Schallwandler, insbesondere Lautsprecher, Anzeigeelemente, Stromversorgungsanschlüsse, klappbare Spiegel, Befestigungsösen oder Gepäcknetze vorgesehen sein.

An beiden Seiten der Mittelkonsole 10 ist jeweils eine Querstrebe 28 vorgesehen, die unterhalb des entsprechenden transparenten Bereichs 14 angeordnet ist und sich in Querrichtung von der Mittelkonsole 10 zu der jeweiligen seitlichen Begrenzung 12 erstreckt. Die Querstreben 28 können dabei als Abstützung für den jeweiligen transparenten Bereich 14 wirken.

In den Fign. 5 und 6 sind zwei Beispiele für die Gestaltung der Dachfläche des Fahrzeugdaches von Fig. 4 gezeigt, wobei in beiden Fällen die Oberseite der Mittelkonsole 10 bündig mit dem an der Mittelkonsole 10 anliegenden Rand des jeweiligen transparenten Bereichs 14 ist und wobei die Oberseite der Mittelkonsole 10 und die seitlichen transparenten Bereiche 14 bezüglich der seitlichen Begrenzung 12 domartig nach oben gewölbt sind.

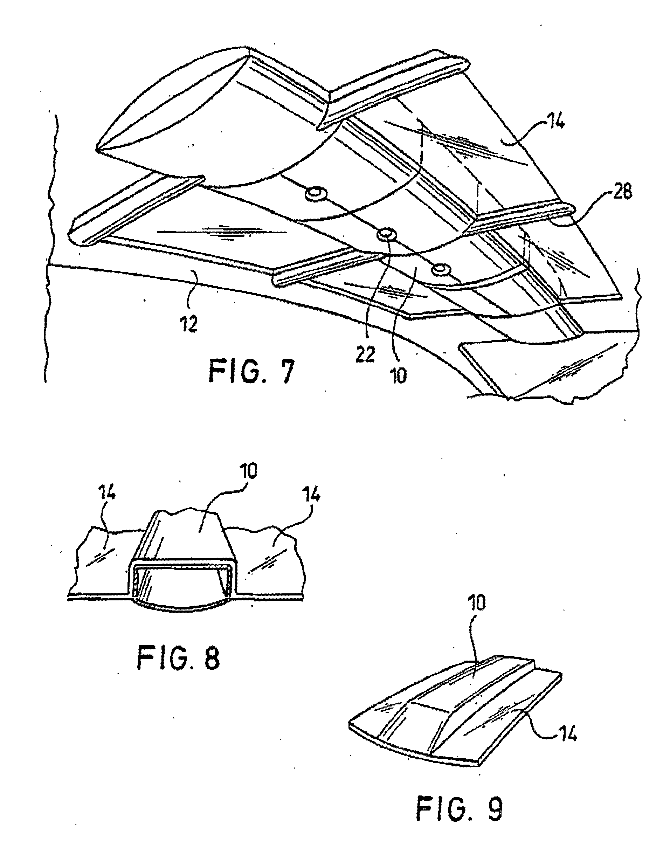

In den Fign. 7 bis 9 ist eine abgewandelte Ausführungsform eines Fahrzeugdaches mit einer Mittelkonsole 10 gezeigt, wobei hier, im Gegensatz zu der Ausführungsform von Fig. 4, die Unterseite der Mittelkonsole im wesentlichen bündig mit dem an der Mittelkonsole 10 anliegenden Rand des jeweiligen transparenten Bereichs 14 ist, siehe Fign. 7 und 8. Die transparenten Bereiche 14 liegen dabei jeweils unmittelbar auf den Querstreben 28 auf.

Als weiterer Unterschied bezüglich der Ausführungsform der Fign. 4 bis 6 ist bei der Ausführungsform der Fign. 7 bis 9 die Mittelkonsole 10 so ausgebildet, dass ihre Oberseite bezüglich der transparenten Bereiche 14, die im wesentlichen eben ausgebildet sind, nach oben hervorsteht.

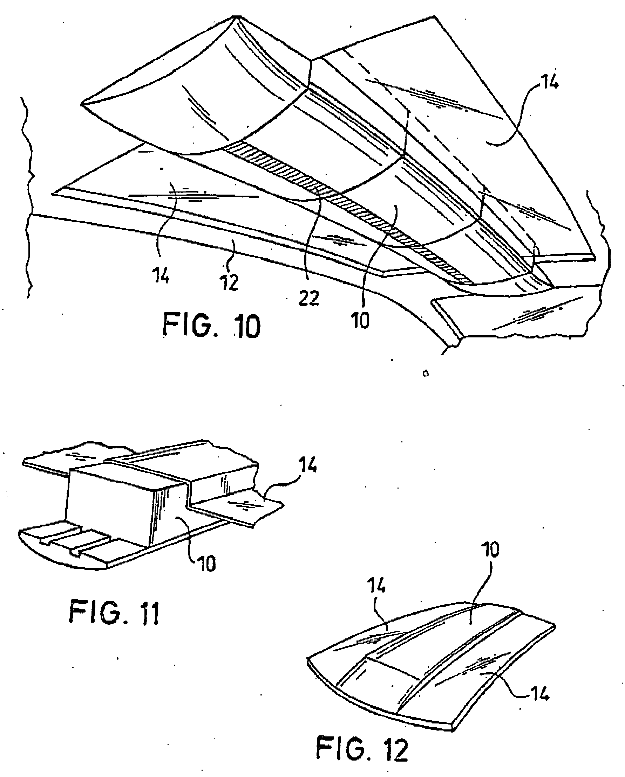

In den Fign. 10 bis 12 ist eine bezüglich der Ausführungsform der Fign. 7 bis 9 abgewandelte Ausführungsform gezeigt, bei welcher die Mittelkonsole 10 so ausgebildet ist, dass sowohl die Oberseite der Mittelkonsole 10 nach oben bezüglich des an die Mittelkonsole angrenzenden Rands der transparenten Bereiche 14 nach oben übersteht als auch die Unterseite der Mittelkonsole 10 bezüglich des an die Mittelkonsole 10 angrenzenden Rands der transparenten Bereiche 14 nach unten übersteht. Ferner ist an der Unterseite der Mittelkonsole 10 eine sich in Längsrichtung erstreckende streifenförmige Beleuchtungseinrichtung 22 vorgesehen.

Es versteht sich, dass die Dachkonsole 10 auch bei den Ausführungsformen der Fign. 7 bis 12 mindestens ein (in den Figuren nicht gezeigtes) Ablagefach aufweist.

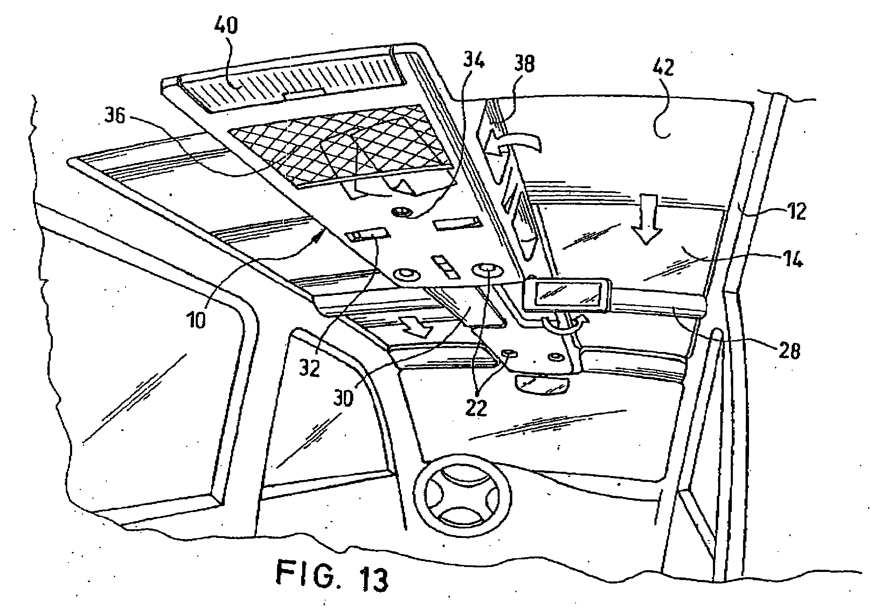

In Fig. 13 ist eine weitere Ausführungsform eines Fahrzeugdaches mit einer Mittelkonsole 10 dargestellt, wobei unterschiedliche Funktionselemente an der Unterseite der Mittelkonsole 10 vorgesehen sind, nämlich Beleuchtungselemente 22, seitlich ausklappbare Spiegel 30, Befestigungsösen 32 für den Transport von Kleidungsstücken oder ähnlichem, ein 12-Volt-Stromversorgungsanschluß 34 sowie ein Gepäcknetz 36. Seitlich sind an dem unteren Teil der Mittelkonsole 10 mehrere Öffnungen 38 für in der Mittelkonsole 10 ausgebildete Ablagefächer vorgesehen. Ferner ist am hinteren Ende der Unterseite der Mittelkonsole 10 ein flächiges Beleuchtungselement 40 angeordnet.

Unterhalb der transparenten Bereiche 14 sind auf beiden Seiten der Mittelkonsole 10 in Dachlängsrichtung verschiebbare Abdeckelemente 42 vorgesehen, um bei Bedarf einen zu starken Lichteinfall durch die transparenten Bereiche 14 in den Fahrzeuginnenraum zu verhindern (in Fig. 13 ist der linke transparente Bereich 14 von solchen Abdeckelementen 42 bezüglich des Fahrzeuginnenraums verdeckt). Die Abdeckelemente 42 können in an sich bekannter Weise als ausziehbare Rollos oder als in Dachlängsrichtung verschiebbare Platten ausgebildet sein, wobei jeweils die seitliche Begrenzung 12 und die entsprechende Seite der Mittelkonsole 10 als Führung für das jeweilige Abdeckelement 42 dienen.

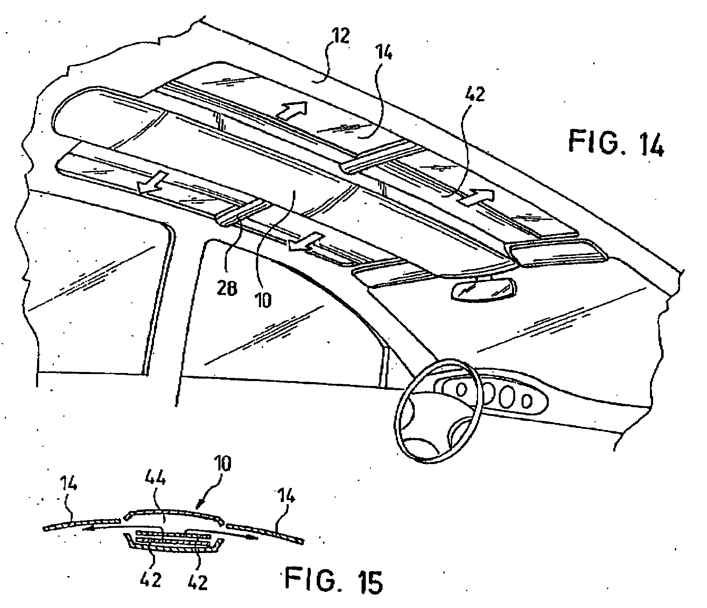

In den Fign. 14 und 15 ist eine abgewandelte Ausführungsform der Mittelkonsole mit Abdeckelementen gezeigt, bei der die Abdeckelemente 42 statt in Dachlängsrichtung in Dachquenichtung verschiebbar sind. Die Abdeckelemente sind dabei plattenartig ausgebildet und jeweils in Dachquerrichtung einander paarweise gegenüberliegend angeordnet. Dabei sind zwei Paare solcher Abdeckelemente 42 vorgesehen, die von einer Querstrebe 28 getrennt sind. Die Abdeckelemente 42 sind dabei jeweils an ihrem vorderen und ihrem hinteren Ende in Dachquerrichtung verschiebbar gelagert, wobei auch die Querstreben 28 als Führung mit einbezogen sind.

Die Abmessungen der Mittelkonsole 10 und der Abdeckelemente 42 sind so gewählt, dass in der Position, in welcher zwei einander paarweise gegenüberliegend angeordnete Abdeckelemente 42 den jeweiligen transparenten Bereich 14 für einen ungehinderten Lichteinfall in den Fahrzeuginnenraum freilegen sollen, diese beiden Abdeckelemente 42, wie in Fig. 15 dargestellt, übereinander liegend vollständig in einem in der Mittelkonsole 12 ausgebildeten Hohlraum bzw. Speicherraum 44 abgelegt werden können.

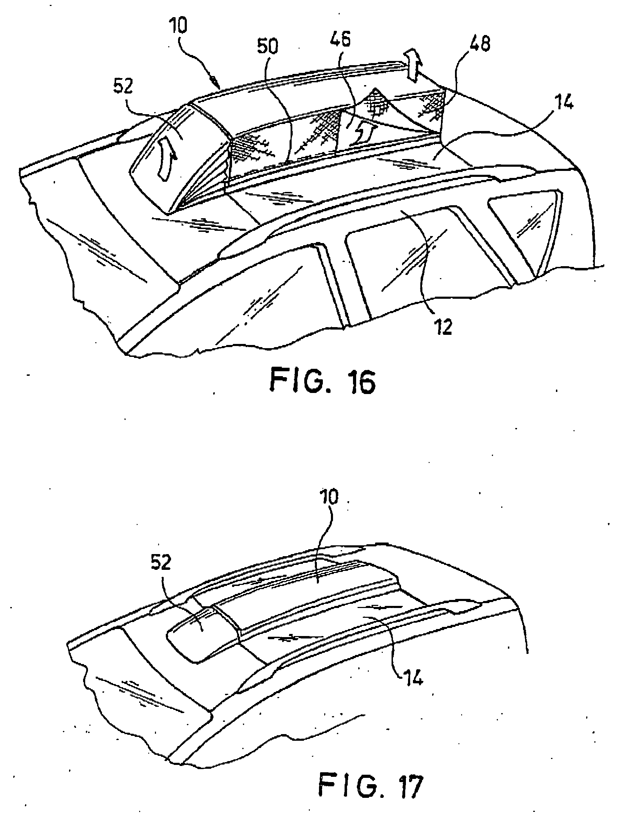

In den Fign. 16 und 17 ist eine weitere Ausführungsform eines Fahrzeugdaches mit einer Mittelkonsole 10 gezeigt, wobei die Mittelkonsole in der Dachhochrichtung zwischen einer Ruhestellung, die in Fig. 17 gezeigt ist, und einer Funktionsstellung, die in Fig. 16 gezeigt ist, verstellbar ist. Die Oberseite der Mittelkonsole 10 liegt in der Funktionsstellung höher als in der Ruhestellung. Gemäß Fig. 16 bildet die Mittelkonsole 10 in der Funktionsstellung einen Ablageraum 46, der seitlich oberhalb der festen Dachfläche zugänglich ist. Die feste Dachfläche ist vorzugsweise zwischen der Mittelkonsole 10 und der seitlichen Begrenzung 12 zu beiden Seiten der Mittelkonsole 10 als transparenter Bereich 14 ausgebildet.

In der Funktionsstellung gemäß Fig. 16 bildet sich seitlich ein Spalt zwischen der festen Dachfläche 14 und der Oberseite der Mittelkonsole 10, der als Zugang zum Ablageraum 46 dient, wobei der Spalt von einer Plane 48 verschließbar ist. Die Plane 48 ist dabei mittels Reißverschlüssen 50 verschließbar und ist als verstärktes Gewebe ausgebildet.

Das vordere Ende 52 der Oberseite der Mittelkonsole 10, ist als ein in der Funktionsstellung als Windabweiser wirkender Abschnitt ausgebildet, welcher für die Funktionsstellung mit seinem hinteren Ende ausstellbar ist.

Gemäß Fig. 17 ist die Oberseite der Mittelkonsole 10 in der Ruhestellung in die feste Dachfläche 14 integriert, wobei dies auch für das vordere Ende 52 gilt.

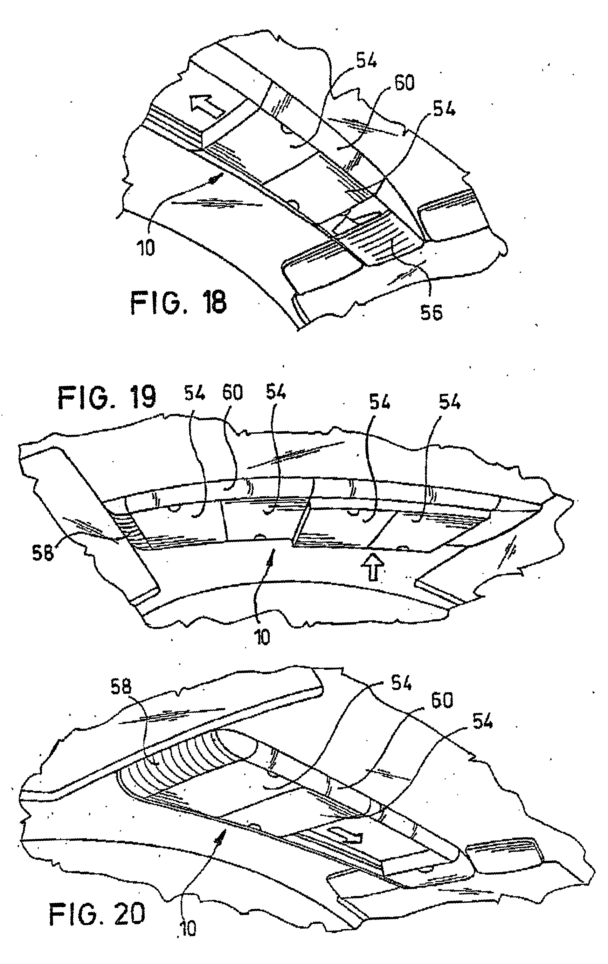

In den Fign. 18 bis 20 ist schematisch eine weitere Ausführungsform eines Fahrzeugdaches mit einer Mittelkonsole 10 gezeigt, wobei an der Unterseite der Mittelkonsole 10 zwei Ablageboxen 54 vorgesehen sind, die vom Fahrzeuginnenraum aus zugänglich und in Dachlängsrichtung entlang der Mittelkonsole 10 verschiebbar sind. Gemäß Fig. 19 können dabei zwei zusätzliche Ablageboxen 54 von unten, d.h. durch eine Bewegung in der Dachhochrichtung, in der Mittelkonsole 10 bei Bedarf eingesetzt werden. Durch eine entgegengesetzte Bewegung können momentan nicht benötigte Ablageboxen 54 wieder aus der Mittelkonsole 10 entfernt werden.

An der Unterseite des vorderen Endabschnitts der Mittelkonsole 10 ist eine Gepäcktasche 56 vorgesehen, siehe Fig. 18.

An dem hinteren Ende der Unterseite der Mittelkonsole 10 ist eine Zusatzbremsleuchte 58 vorgesehen, während die Mittelkonsole seitlich mit in Dachlängsrichtung verlaufenden Beleuchtungselementen 60 versehen ist.

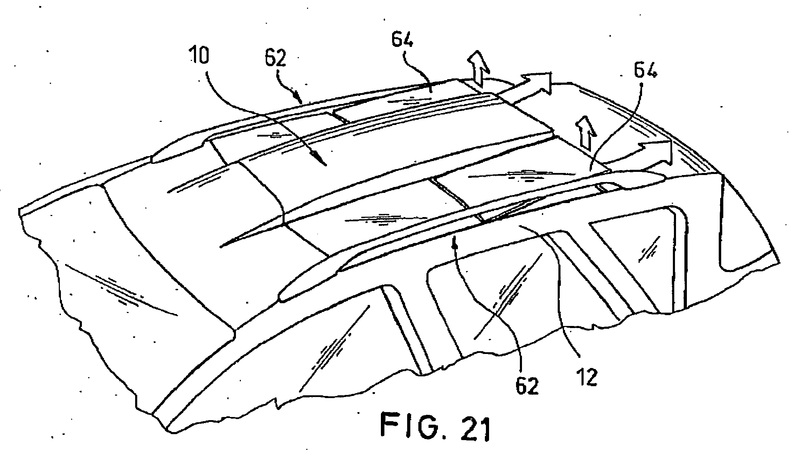

In Fig. 21 ist eine weitere Ausführungsform eines Fahrzeugdaches mit einer Mittelkonsole 10 gezeigt, wobei beiderseits der Mittelkonsole 10 zwischen der Mittelkonsole 10 und der seitlichen Begrenzung 12 ein seitlicher Bereich 62 vorgesehen ist, der vorzugsweise transparent ausgebildet ist. Der hintere Abschnitt der beiden seitlichen Bereiche 62 ist als an ihrem hinteren Ende ausstellbare Lüftungsklappe 64 ausgebildet. Beim Ausstellen der Lüftungsklappen 64 bildet sich zwischen deren Hinterkante und der festen Dachfläche ein Lüftungsspalt.

Die Oberseite der Mittelkonsole 10 ist mit dem vorderen festen Abschnitt des seitlichen Bereichs 62 einstückig ausgebildet, wobei die Oberseite der Mittelkonsole bezüglich des seitlichen Bereichs 62 nach oben gewölbt ist.

Vorzugsweise sind die Oberseite der Mittelkonsole und der seitliche Bereich 62 einschließlich der Lüftungsklappen 64 aus Polycarbonat gefertigt.

Es versteht sich, dass auch bei anderen Ausführungsformen, insbesondere bei den Ausführungsformen gemäß Fig. 2, 5. 6, 8, 9, 11 und 12, die Oberseite der Mittelkonsole 10 einstückig mit den seitlichen transparenten Bereichen 14 ausgebildet sein kann, wobei als Material vorzugsweise Polycarbonat gewählt wird.

### Bezugszeichenliste

- 10: Mittelkonsole
- 12: seitliche Begrenzung
- 14: seitliche transparente Bereiche
- 16: vorderer transparenter Bereich
- 18: Befestigungsösen
- 20: Klappe
- 22: Beleuchtungselement
- 24: Belüftungselement
- 26: Flachbildschirm
- 28: Querstrebe
- 30: Klappspiegel
- 32: Befestigungsöse
- 34: Stromanschluss
- 36: Gepäcknetz
- 38: Öffnung für Ablagefach
- 40: Beleuchtungselement
- 42: Sonnenschutzplatte
- 44: Speicherraum für 42
- 46: Stauraum
- 48: Plane
- 50: Reißverschluss
- 52: vorderer Abschnitt von 10
- 54: Ablagebox
- 56: Gepäcktasche
- 58: Zusatzbremsleuchte
- 60: Beleuchtungselement
- 62: seitlicher Bereich
- 64: Lüftungsklappe

## Patentansprüche

1. Kraftfahrzeugdach, mit einer sich in Dachlängsrichtung erstreckenden Mittelkonsole (10), wobei ein seitlicher Bereich (14), der sich jeweils seitlich von der Mittelkonsole bis zu einer seitlichen Dachbegrenzung (12) erstreckt, transparent ausgebildet ist, **dadurch gekennzeichnet, dass** auf jeder Seite unterhalb des transparenten Bereichs jeweils mindestens ein Abdeckelement (42) vorgesehen ist, welches verstellbar ist, um den transparenten Bereich (14) wahlweise freizulegen oder bezüglich des Fahrzeuginnenraums zu verdecken, wobei die Abdeckelemente jeweils in Dachquerrichtung verstellbar sind und in der den transparenten Bereich freilegenden Stellung in der Mittelkonsole (10) aufgenommen sind.

2. Kraftfahrzeugdach nach Anspruch 1, **dadurch gekennzeichnet, dass** die Abdeckelemente als Platten (42) ausgebildet sind, welche in der den transparenten Bereich (14) freilegenden Stellung in einem in der Mittelkonsole ausgebildeten Speicherraum (44) aufgenommen sind.

3. Kraftfahrzeugdach nach Anspruch 2, **dadurch gekennzeichnet, dass** die Abdeckelemente (42) in dem Speicherraum (44) übereinander schiebbar sind.

4. Kraftfahrzeugdach nach einem der Ansprüche 1 bis 3, **dadurch gekennzeichnet, dass** die Abdeckelemente (42) paarweise in Dachquerrichtung einander gegenüber liegend angeordnet sind.

5. Kraftfahrzeugdach nach einem der Ansprüche 1 bis 4, **dadurch gekennzeichnet, dass** die Abdeckelemente (42) in Dachlängrichtung durch dachfeste Querstreben (28) voneinander getrennt sind.

6. Kraftfahrzeugdach nach einem der Ansprüche 1 bis 5, **dadurch gekennzeichnet, dass** die Abdeckelemente (42) an ihrem vorderen und ihrem hinteren Ende jeweils in einer dachfesten Führung in Dachquerrichtung verschiebbar gelagert sind.

7. Kraftfahrzeugdach nach einem der vorangehenden Ansprüche, **dadurch gekennzeichnet, dass** die Oberseite der Mittelkonsole (10) einstückig mit den seitlichen transparenten Bereichen (14) ausgebildet ist.
